# EUROPEAN PATENT SPECIFICATION

(11) **EP 1 512 073 B1**
(45) Date of publication and mention of the grant of the patent: **14.11.2007**
(21) Application number: 03725229.3
(22) Date of filing: 29.04.2003
(51) Int. Cl.: G06F 9/46, H04Q 7/38, H04L 29/06

(54) **LOAD BALANCER FOR MULTIPROCESSOR PLATFORMS**
LASTAUSGLEICHER FÜR MEHRPROZESSORPLATTFORMEN
DISPOSITIF D'EQUILIBRAGE DES CHARGES POUR PLATE-FORMES DE MULTIPROCESSEUR

(30) Priority: 12.06.2002 FI 20021137
(43) Date of publication of application: 09.03.2005
(73) Proprietor: Nokia Corporation, 02150 Espoo (FI)
(72) Inventor: NI, Shaoji, FIN-02600 Espoo (FI); JOKIAHO, Timo, FIN-01620 Vantaa (FI); PANHELAINEN, Mika, FIN-80220 Joensuu (FI); LATVALA, Mikael, FIN-00730 Helsinki (FI); TAKALA, Vesa-Pekka, FIN-01800 Klaukkala (FI)
(74) Representative: Simmelvuo, Markku Kalevi
(86) International application number: PCT/FI2003/000338
(87) International publication number: WO 2003/107184

(56) References cited:
- EP-A2- 1 091 602
- '3rd Generation partnership project; Technical specification group core network; General packet radio service (GPRS); GPRS Tunnelling protocol (GTP) across the Gn and Gp interface (Release 1999)' 3GPP TS 29. 060 V3.12.0 TECHNICAL SPECIFICATION March 2002, SEE CHAPTERS 7.7.13-7.7.15; 8; 11, pages 49 - 50, 68-70, 76-79, XP002967327

## Description

### FIELD OF THE INVENTION

The present invention relates to telecommunications. In particular, the present invention relates to a novel and improved method and system for load balancing for control plane traffic of a network element comprising multiple CPU (central processing unit) nodes assigned to a common external IP address in a packet data enabled telecommunication network.

### BACKGROUND OF THE INVENTION

Recently telecommunication networks, e.g. mobile communication networks have started to adopt Internet Protocol (IP) based implementations. A typical network element comprises multiple application CPU nodes. Typically one external IP address is used for these CPU nodes, thus resulting in flexible scaling capacity expansion, easy balancing of computing power of each CPU node, and less manual configuration of applications.

However, since one external IP address is used for all the application CPU nodes, the functionality of a load balancer needs to be implemented. Because the topology and internal IP addresses of the CPU nodes are hidden from outside, a load balancer is needed to direct control plane traffic, such as signaling, to the nodes for processing.

Since load balancing is directly dependent on protocols and interfaces involved, and since protocols and interfaces vary depending on network element involved, load balancing typically needs to be implemented on a network element specific basis for it be effective.

General Packet Radio Service (GPRS) is a packet data service designed to support especially digital mobile networks based on the GSM (Global System for Mobile Communications) standard, UMTS (Universal Mobile Telecommunications System) or GERAN (GSM EDGE Radio Access Network) systems, as well as American Time Division Multiple Access (TDMA) system, the IS-136. Additionally, GPRS may also be connected to an IP Multimedia Subsystem (IMS).

A GPRS enabled mobile communication network comprises a Serving GPRS Support Node (SGSN) and a Gateway GPRS Support Node (GGSN). An SGSN typically delivers packets to GPRS enabled mobile stations (MS) within its service area. A GGSN is typically used as an interface to external IP networks such as the Internet, other mobile service providers' GPRS services, or enterprise intranets. A GGSN may maintain routing information necessary to tunnel the protocol data units (PDU) to the SGSN that services a particular MS.

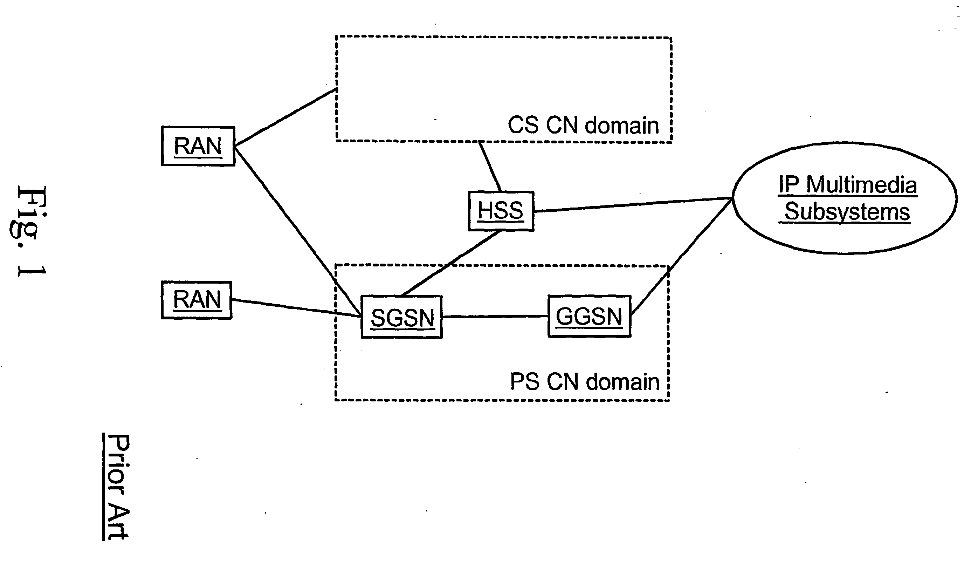

Figure 1 discloses an example of a prior art GPRS enabled communication network. The network comprises a Circuit Switched Core Network (CS CN) domain and a Packet Switched Core Network (PS CN) domain. The Packet Switched Core Network domain further comprises an SGSN and a GGSN. A Home Subscriber Server (HSS) connects the SGSN and the Circuit Switched Core Network to each other. The network further comprises IP Multimedia Subsystems connected to the GGSN and the Home Subscriber Server. The network further comprises Radio Access Networks (RAN) connected to the Circuit Switched Core Network and the Packet Switched Core Network.

A GGSN utilizes several interfaces with several protocols. Thus several types of traffic may arrive to a GGSN simultaneously. Typically the traffic associated with a GGSN needs to be delivered to a specific subscriber or to a session on a specific signaling node.

Thus load balancing for a GGSN comprising multiple CPU nodes assigned to a common external IP address needs to address several issues. The load of each application CPU node needs to be balanced. Further, the response message from a source network element needs to be forwarded to a destination application CPU node that previously sent a signaling request to the source network element. Further, a series of sequential signaling messages for information updating and maintaining sent by other network elements to a specific subscriber or session needs to be forwarded to the destination application CPU node serving the particular subscriber or session.

The prior art document EP 1091602 relates to a dynamic load balancing method in wireless communication network, which involves redesignating active and standby radio control software instances to transfer active message processing without interrupting service to cell.

Thus there is need for a solution solving all these issues. Prior art load balancers may solve some of these issues. However, there is no available method providing a solution for all the issues mentioned for a GGSN comprising multiple CPU nodes assigned to a common external IP address.

### SUMMARY OF THE INVENTION

The present invention concerns load balancing for control plane traffic of a network element comprising multiple CPU nodes assigned to a common external IP address in a packet data enabled telecommunication network. IP messages addressed to the network element are received, and received IP messages comprising GTP-C (GPRS Tunneling Protocol - Control plane) messages are identified. First, a destination IP address value of a received IP message is identified, and it is determined from the identified destination IP address value whether the IP message belongs to control plane traffic or user plane traffic. Next a protocol value of an IP message belonging to control plane traffic is identified, and it is determined from the identified protocol value whether the IP message comprises an UDP (User Datagram Protocol) message or a TCP (Transmission Control Protocol) message.

A destination port number value of an IP message comprising a TCP message is identified, and the TCP message is forwarded to a CPU node based on its identified destination port number value. A destination port number value of an IP message comprising a UDP message is identified, and it is determined from the identified destination port number value whether the UDP message further comprises a GTP-C message, a GTP' (GTP Prime) message, a DHCP (Dynamic Host Configuration Protocol) message or a RADIUS (Remote Authentication Dial In User Service) message. A GTP' message, a DHCP message or a RADIUS message is forwarded to a CPU node based on its identified destination port number value.

According to the invention a TEID-C (Tunnel Endpoint Identifier for Control Plane) value of a GTP-C message is identified. The GTP-C message is forwarded to a CPU node based on its identified TEID-C value, if its identified TEID-C value does not equal zero. However, if the identified TEID-C value of the GTP-C message equals zero, a message type value of the GTP-C message is further identified. The GTP-C message is forwarded to a CPU node by using a predetermined load balancing procedure, if its identified message type value equals "Create PDP Context". Said predetermined load balancing procedure may be based on e.g. hash function or round robin method. If the identified message type value of the GTP-C message does not equal "Create PDP Context", the GTP-C message is forwarded to a CPU node by using a predetermined path and error management procedure. The aforementioned PDP refers to Packet Data Protocol.

In an embodiment of the invention the packet data enabled telecommunication network is a GPRS enabled communication network, e.g. a 3GPP system (3^{rd} Generation Partnership Project). A 3GPP system comprises user equipment, a radio access network and a core network. The radio access network may be UTRAN (Universal Terrestrial Radio Access Network) and/or GERAN. The core network may comprise a circuit-switched domain, a packet-switched domain and/or an IP multimedia subsystem.

In an embodiment of the invention the network element is a GGSN element.

The present invention provides a solution for several issues regarding load balancing for a GGSN comprising multiple CPU nodes assigned to a common external IP address. The present invention makes it possible to balance the load of each application CPU node. Further, the present invention makes it possible to forward the response message from a source network element to a destination application CPU node that previously sent a signaling request to the source network element. Further, the present invention makes it possible to forward a series of sequential signaling messages for information updating and maintaining sent by other network elements to a specific subscriber or session to the destination application CPU node serving the particular subscriber or session.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig 1 is a block diagram illustrating a prior art GPRS enabled communication network,
Fig 2 is a flow chart illustrating a load balancing method according to one embodiment of the present invention, and
**Fig 3** is a block diagram illustrating a load balancing system according to one embodiment of the present invention.

### DETAILED DESCRIPTION OF THE INVENTION

Reference will now be made in detail to the embodiments of the present invention, examples of which are illustrated in the accompanying drawings.

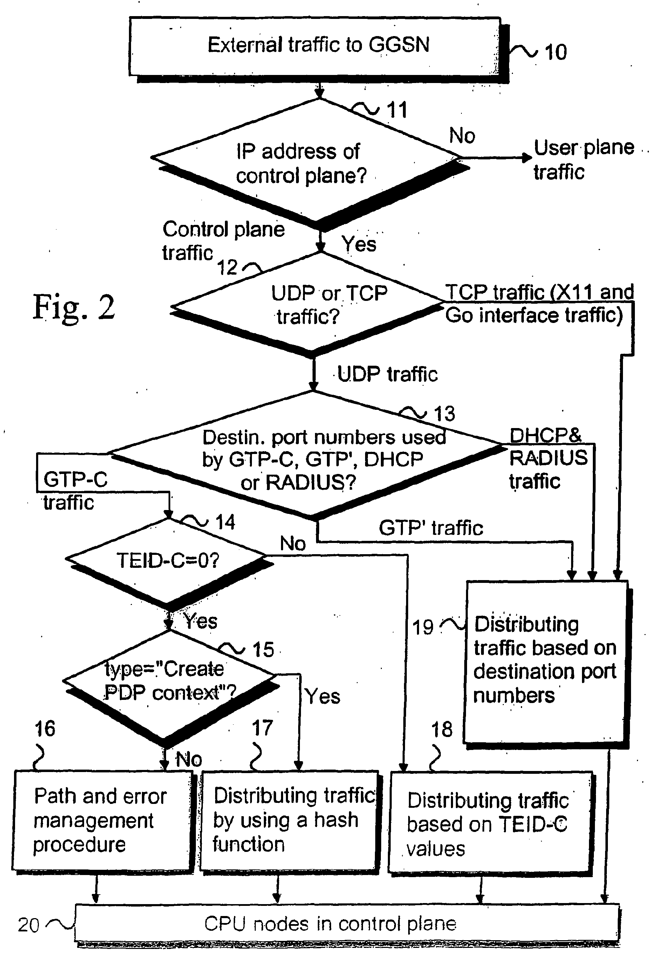

Figure 2 illustrates a load balancing method for control plane traffic of a GGSN network element comprising multiple CPU nodes assigned to a common external IP address in a GPRS enabled telecommunication network, e.g. a 3GPP system. IP messages addressed to the network element are received, phase 10. Received IP messages comprising GTP-C messages are identified. First, a destination IP address value of a received IP message is identified, and it is determined from the identified destination IP address value whether the IP message belongs to control plane traffic or user plane traffic, phase 11. Next a protocol value of an IP message belonging to control plane traffic is identified, and it is determined from the identified protocol value whether the IP message comprises an UDP message or a TCP message, phase 12.

If the message is a TCP message, its destination port number value is identified, and the TCP message is forwarded to a CPU node based on its identified destination port number value, phase 19. If the message is a UDP message, its destination port number value is identified, and it is determined from the identified destination port number value whether the UDP message further comprises a GTP-C message, a GTP' message, a DHCP message or a RADIUS message, phase 13. A GTP' message, a DHCP message or a RADIUS message is forwarded to a CPU node based on its identified destination port number value, phase 19.

If the message is a GTP-C message, its TEID-C value is identified, phase 14. In phase 18 the GTP-C message is forwarded to a CPU node based on its identified TEID-C value, if its identified TEID-C value does not equal zero. However, if the identified TEID-C value of the GTP-C message equals zero, a message type value of the GTP-C message is further identified, phase 15. The GTP-C message is forwarded to a CPU node by using a predetermined load balancing procedure, if its identified message type value equals "Create PDP Context", phase 17. If the identified message type value of the GTP-C message does not equal "Create PDP Context", the GTP-C message is forwarded to a CPU node by using a predetermined path and error management procedure, phase 16.

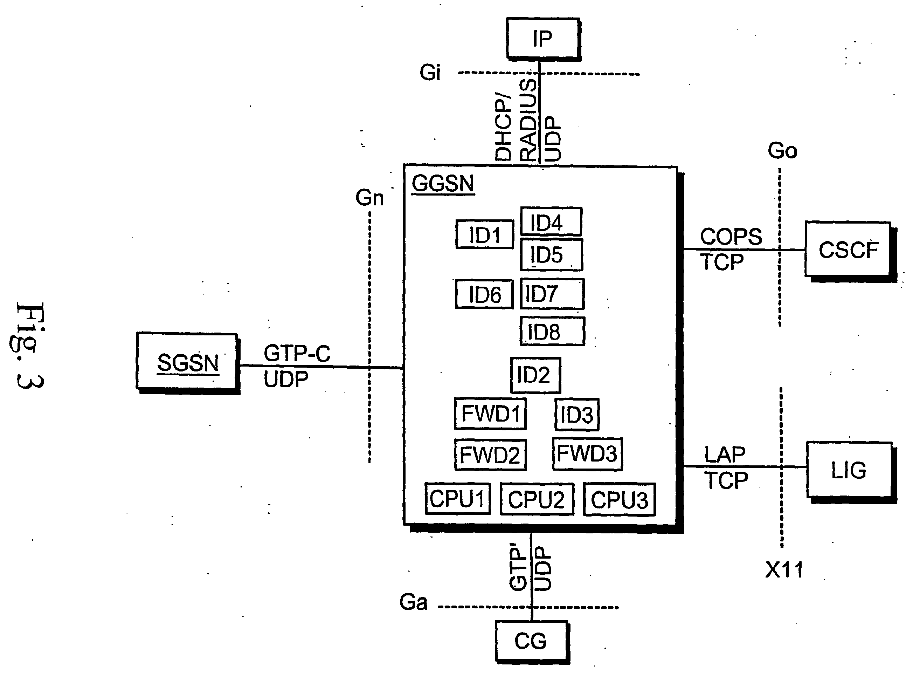

Figure 3 illustrates a load balancing system for control plane traffic of a GGSN network element comprising multiple CPU nodes assigned to a common external IP address in a GPRS enabled telecommunication network, e.g. a 3GPP system. In the embodiment of the invention disclosed in Figure 3 the telecommunication network comprises an SGSN network element SGSN connected to the GGSN network element GGSN through Gn interface using GTP-C protocol on top of UDP protocol. The telecommunication network further comprises a Charging Gateway CG connected to the GGSN network element GGSN through Ga interface using GTP' protocol on top of UDP protocol. The telecommunication network further comprises a LIG (Legal Interception Gateway) connected to the GGSN network element GGSN through X11 interface using a vendor dependent protocol, e.g. LAP protocol (Lawful-interception Application Protocol) on top of TCP protocol. The telecommunication network further comprises a CSCF (Call State Control Function, sometimes also referred to as Call Server Control Function; typically used for executing call control functions, service switching functions, address translation functions and vocoder negotiation functions) connected to the GGSN network element GGSN through Go interface using COPS (Common Open Policy Service) protocol on top of TCP protocol. The telecommunication network further comprises an external IP network IP connected to the GGSN network element GGSN through Gi interface using DHCP and/or RADIUS protocol on top of UDP protocol. Thus Figure 3 serves to illustrate how the GGSN utilizes several interfaces with several protocols. Several types of traffic may arrive to the GGSN simultaneously. Typically the traffic associated with the GGSN needs to delivered to a specific subscriber or to a session on a specific signaling node.

In the embodiment of the invention disclosed in Figure 3 the GGSN network element GGSN comprises CPU nodes CPU₁, CPU₂ and CPU₃ assigned to a common external IP address for receiving IP messages. The system further comprises first identifying means ID1 for identifying received IP messages comprising GTP-C messages, second identifying means ID2 for identifying a TEID-C value of a GTP-C message, first forwarding means FWD1 for forwarding a GTP-C message with a TEID-C value non-equal to zero to a CPU node based on the TEID-C value, third identifying means ID3 for further identifying a message type value of a GTP-C message with a TEID-C value equaling zero, second forwarding means FWD2 for forwarding a GTP-C message with a message type value equaling "Create PDP Context" to a CPU node by using a predetermined load balancing procedure, and third forwarding means FWD3 for forwarding a GTP-C message with a message type value non-equal to "Create PDP Context" to a CPU node by using a predetermined path and error management procedure.

The system illustrated in Figure 3 further comprises fourth identifying means ID4 for identifying a destination IP address value of a received IP message and determining from the identified destination IP address value whether the IP message belongs to control plane traffic or user plane traffic, fifth identifying means ID5 for identifying a protocol value of an IP message belonging to control plane traffic and determining from the identified protocol value whether the IP message comprises an UDP message or a TCP message, and sixth identifying means ID6 for identifying a destination port number value of an IP message comprising a TCP message and forwarding the TCP message to a CPU node based on its identified destination port number value.

The system illustrated in Figure 3 further comprises seventh identifying means ID7 for identifying a destination port number value of an IP message comprising a UDP message and determining from the identified destination port number value whether the UDP message further comprises a GTP-C message, a GTP' message, a DHCP message or a RADIUS message, and eighth identifying means ID8 for forwarding a GTP' message, a DHCP message or a RADIUS message to a CPU node based on its identified destination port number value.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A load balancing method for control plane traffic of a network element (GGSN) comprising multiple central processing unit, CPU, nodes (CPU₁, CPU₂,..., CPU_{N}) assigned to a common external Internet Protocol, IP, address in a packet data enabled telecommunication network, the method comprising the steps of:
receiving IP messages addressed to the network element, and
identifying received IP messages comprising General Packet Radio Service, GPRS, Tunneling Protocol - Control plane, GTP-C, messages,
**characterized in that** the method further comprises the steps of:
identifying a Tunnel Endpoint Identifier for Control Plane, TEID-C, value of a GTP-C message,
depending on the identified TEID-C value of the GTP-C message either forwarding said GTP-C message to a CPU node based on the identified TEID-C value of said GTP-C message or identifying a message type value of said GTP-C message, and
forwarding a GTP-C message with an identified message type value equal to "Create Packet Data Protocol Context" to a CPU node by using a predetermined load balancing procedure.

2. The method according to claim 1, **characterized in that** said forwarding the GTP-C message to a CPU node based on the identified TEID-C value of said GTP-C message is performed if the identified TEID-C value does not equal zero, and said identifying the message type value of the GTP-C message is performed if the identified TEID-C value equals zero.

3. The method according to claims 1 or 2, **characterized in that** the method further comprises the step of:
forwarding a GTP-C message with an identified message type value non-equal to "Create Packet Data Protocol Context" to a CPU node by using a predetermined path and error management procedure.

4. The method according to claims 1, 2 or 3, **characterized in that** the step of identifying received IP messages comprising GTP-C messages further comprises the steps of:
identifying a destination IP address value of a received IP message, and
determining from the identified destination IP address value whether the IP message belongs to control plane traffic or user plane traffic.

5. The method according to claim 4, **characterized in that** the method further comprises the steps of:
identifying a protocol value of an IP message belonging to control plane traffic, and
determining from the identified protocol value whether the IP message comprises an User Datagram Protocol, UDP, message or a Transmission Control Protocol, TCP, message.

6. The method according to claim 5, **characterized in that** the method further comprises the steps of:
identifying a destination port number value of an IP message comprising a TCP message, and
forwarding the TCP message to a CPU node based on its identified destination port number value.

7. The method according to claim 5, **characterized in that** the method further comprises the steps of:
identifying a destination port number value of an IP message comprising a UDP message, and
determining from the identified destination port number value whether the UDP message further comprises a GTP-C message, a General Packet Radio Service Tunneling Protocol Prime, GTP-C', message, a Dynamic Host Configuration Protocol, DHCP, message or a Remote Authentication Dial In User Service, RADIUS, message.

8. The method according to claim 7, **characterized in that** the method further comprises the step of:
forwarding a GTP-C' message, a DHCP message or a RADIUS message to a CPU node based on its identified destination port number value.

9. The method according to claims 1, 2, 3, 4, 5, 6, 7 or 8, **characterized in that** the packet data enabled telecommunication network is a GPRS enabled communication network.

10. The method according to claim 9, **characterized in that** the network element is a Gateway General Packet Radio Service Support Node, GGSN, element.

11. A load balancing system for control plane traffic of a network element (GGSN) comprising multiple central processing unit, CPU, nodes (CPU₁, CPU₂,..., CPU_{N}) assigned to a common external Internet Protocol, IP, address in a packet data enabled telecommunication network, the load balancer comprising:
first identifying means (ID1) for identifying received IP messages addressed to the network element comprising General Packet Radio Service Tunneling Protocol - Control plane, GTP-C, messages,
**characterized in that** the load balancer further comprises:
second identifying means (ID2) for identifying a Tunnel Endpoint Identifier for Control Plane, TEID-C, value of a GTP-C message,
first forwarding means (FWD1) for forwarding a GTP-C message to a CPU node based on the identified TEID-C value of said GTP-C message,
third identifying means (ID3) for identifying a message type value of a GTP-C message, and
second forwarding means (FWD2) for forwarding a GTP-C message with an identified message type value equal to "Create Packet Data Protocol Context" to a CPU node by using a predetermined load balancing procedure.

12. The load balancing system according to claim 11, **characterized in that** said first forwarding means operate in response to the identified TEID-C value not equaling zero, and said third identifying means operate in response to the identified TEID-C value equaling zero.

13. The load balancing system according to claims 11 or 12, **characterized in that** the load balancer further comprises:
third forwarding means (FWD3) for forwarding a GTP-C message with an identified message type value non-equal to "Create Packet Data Protocol Context" to a CPU node by using a predetermined path and error management procedure.

14. The load balancing system according to claims 11, 12 or 13, **characterized in that** the load balancing system further comprises:
fourth identifying means (ID4) for identifying a destination IP address value of a received IP message and determining from the identified destination IP address value whether the IP message belongs to control plane traffic or user plane traffic.

15. The load balancing system according to claim 14, **characterized in that** the load balancing system further comprises:
fifth identifying means (ID5) for identifying a protocol value of an IP message belonging to control plane traffic and determining from the identified protocol value whether the IP message comprises a User Datagram Protocol, UDP, message or a Transmission Control Protocol, TCP, message.

16. The load balancing system according to claim 15, **characterized in that** the load balancing system further comprises:
sixth identifying means (ID6) for identifying a destination port number value of an IP message comprising a TCP message and forwarding the TCP message to a CPU node based on its identified destination port number value.

17. The load balancing system according to claim 15, **characterized in that** the load balancing system further comprises:
seventh identifying means (ID7) for identifying a destination port number value of an IP message comprising a UDP message and determining from the identified destination port number value whether the UDP message further comprises a GTP-C message, a General Packet Radio Service Tunneling Protocol Prime, GTP-C', message, a Dynamic Host Configuration Protocol, DHCP, message or a Remote Authentication Dial In User Service, RADIUS, message.

18. The load balancing system according to claim 17, **characterized in that** the load balancing system further comprises:
eighth identifying means (ID8) for forwarding a GTP-C' message, a DHCP message or a RADIUS message to a CPU node based on its identified destination port number value.

19. The load balancing system according to claims 11 - 18, **characterized in that** the load balancing system is arranged in a Gateway General Packet Radio Service Support Node element (GGSN) of a GPRS enabled telecommunication network.

## Patentansprüche

1. Lastausgleichsverfahren zur Steuerung von Ebenen-Verkehr eines Netzwerkelements (GGSN), das mehrere Zentralverarbeitungseinheiten, CPU, -Knoten (CPU₁, CPU₂, ..., CPU_{N}) umfasst, die einer gemeinsamen externen Internetprotokoll, IP, -Adresse zugeteilt sind, in einem Paketdaten-Telekommunikationsnetzwerk, wobei das Verfahren die Schritte umfasst:
Empfangen von IP-Nachrichten, die an das Netzwerkelement adressiert sind, und
Identifizieren empfangener IP-Nachrichten, die Allgemeine-Paketfunkdienst, GPRS, -Tunnelprotokoll - Steuerebene-, GTP-C, -Nachrichten umfassen,
**dadurch gekennzeichnet, dass** das Verfahren weiter die Schritte umfasst:
Identifzieren einer Tunnelendpunktkennung für den Steuerebene-, TEID-C,-Wert einer GTP-C-Nachricht,
in Abhängigkeit des identifizierten TEID-C-Wertes der GTP-C-Nachricht, entweder Weiterleiten der GTP-C-Nachricht an einen CPU-Knoten, basierend auf dem identifizierten TEID-C-Wert der GTP-C-Nachricht, oder Identifiziern eines Nachrichtentypwerts der GTP-C-Nachricht, und
Weiterleiten einer GTP-C-Nachricht mit einem identifizierten Nachrichtentypwert, der gleich einem "Erzeuge Paketdatenprotokoll-Kontext" ist, an einen CPU-Knoten durch Verwenden eines vorgegebenen Lastausgleichsverfahrens.

2. Verfahren nach Anspruch 1, **dadurch gekennzeichnet, dass** das Weiterleiten der GTP-C-Nachricht an einen CPU-Knoten auf der Grundlage des identifzierten TEID-C-Werts der GTP-C-Nachricht ausgeführt wird, wenn der identifizierte TEID-C-Wert nicht gleich Null ist, und das Identifzieren des Nachrichtentypwerts der GTP-C-Nachricht ausgeführt wird, wenn der identifizierte TEID-C-Werts gleich Null ist.

3. Verfahren nach Anspruch 1 oder 2, **dadurch gekennzeichnet, dass** das Verfahren weiter den Schritt umfasst:
Weiterleiten einer GTP-C-Nachricht mit einem identifizeirten Nachrichtentypwert, der nicht gleich "Erzeuge Paketdatenprotokoll-Kontext" ist, an einen CPU-Knoten durch Verwenden eines vorgegebenen Pfad- und Fehlermanagementverfahrens.

4. Verfahren nach einem der Ansprüche 1, 2 oder 3, **dadurch gekennzeichnet, dass** der Schritt des Identifizierens empfangener IP-Nachrichten, die GTP-C-Nachrichten umfassen, weiter die Schritte umfasst:
Identifizieren eines Ziel-IP-Adresswertes einer empfangenen IP-Nachricht und
Bestimmen aus dem identifzierten Ziel-IP-Adresswert, ob die IP-Nachricht zu einem Steuerebene-Verkehr oder zu dem Benutzerebene-Verkehr gehört.

5. Verfahren nach Anspruch 4, **dadurch gekennzeichnet, dass** das Verfahren weiter die Schritte umfasst:
Identifizieren eines Portokollwerts einer IP-Nachricht, die zu dem Steuerebene-Verkehr gehört, und
Bestimmen aus dem identifizierten Protkollwert, ob die IP-Nachricht eine Benutzer-Datagrammprotokoll, UDP, -Nachricht oder eine Übertragungssteuerprotokoll-, TCP, -Nachricht umfasst.

6. Verfahren nach Anspruch 5, **dadurch gekennzeichnet, dass** das Verfahren weiter die Schritte umfasst:
Identifizieren eines Ziel-Port-Nummernwerts einer IP-Nachricht, die eine TCP-Nachricht umfasst, und
Weiterleiten der TCP-Nachricht an einen CPU-Knoten, basierend auf ihrem identifizierten Ziel-Port-Nummernwert.

7. Verfahren nach Anspruch 5, **dadurch gekennzeichnet, dass** das Verfahren weiter die Schritte umfasst:
Identifizieren eines Ziel-Port-Nummernwerts einer IP-Nachricht, die eine UDP-Nachricht umfasst, und
Bestimmen aus dem identifizierten Ziel-Port-Nummernwert, ob die UDP-Nachricht weiter eine GTP-C-Nachricht umfasst, eine Allgemeine-Paket-Funkdienst-Tunnelprotokoll-Strich, GTP-C', -Nachricht, eine Dynamische-Host-Einrichtungs-Protokoll, DHCP, -Nachricht oder eine Entfernte-Authentifizierungs-Einwahl-Benutzerdienst, RADIUS, -Nachricht.

8. Verfahren nach Anspruch 7, **dadurch gekennzeichnet, dass** das Verfahren weiter die Schritte umfasst:
Weiterleiten einer GTP-C-Nachricht, einer DHCP-Nachricht oder einer RADIUS-Nachricht an einen CPU-Knoten, basierend auf ihrem identifizierten Ziel-Port-Nummernwert.

9. Verfahren nach einem der Ansprüche 1, 2, 3, 4, 5, 6, 7 oder 8, **dadurch gekennzeichnet, dass** das Paketdaten-Telekommunikationsnetzwerk ein GPRS-Kommunikationsnetzwerk ist.

10. Verfahren nach Anspruch 9, **dadurch gekennzeichnet, dass** das Netzwerkelement ein Gateway-Allgemeiner-Paketfunkdienst-Unterstützungsknoten, GGSN,-Element ist.

11. Lastausgleichssystem für den Steuerebene-Verkehr eines Netzwerkelements (GGSN), das mehrere Zentralverarbeitungseinheiten, CPU, -Knoten (CPU₁, CPU₂, ..., CPU_{N}) umfasst, die einer gemeinsamen externen Internetprotokoll, IP, -Adresse zugeteilt sind, in einem Paketdaten-Telekommunikationsnetzwerk, wobei das Lastausgleichssystem umfasst:
ein erstes Identifizierungsmittel (ID1) zum Identifizieren empfangener IP-Nachrichten, die an das Netzwerkelement adressiert sind, wobei sie Allgemeine-Paketfunkdienst-Tunnelprotokoll Steuerebene, GTP-C, -Nachrichten umfassen,
**dadurch gekennzeichnet, dass** das Lastausgleichssystem weiter umfasst:
ein zweites Identifizierungsmittel (ID2) zum Identifzieren einer Tunnelendpunktkennung für den Steuerebene, TEID-C,-Wert einer GTP-C-Nachricht,
ein erstes Weiterleitungsmittel (FWD1) zum Weiterleiten der GTP-C-Nachricht an einen CPU-Knoten, basierend auf dem identifizierten TEID-C-Wert der GTP-C-Nachricht,
ein drittes Identifizierungsmittel (ID3) zum Identifiziern eines Nachrichtentypwerts einer GTP-C-Nachricht, und
ein zweites Weiterleitungsmittel (FWD2) zum Weiterleiten einer GTP-C-Nachricht mit einem identifizierten Nachrichtentypwert, der gleich einem "Erzeuge Paketdatenprotokoll-Kontext" ist, an einen CPU-Knoten durch Verwenden eines vorgegebenen Lastausgleichsverfahrens.

12. Lastausgleichssystem nach Anspruch 11, **dadurch gekennzeichnet, dass** das erste Weiterleitungsmittel in Reaktion auf den identifizierten TEDI-C-Wert, der nicht gleich Null ist, betrieben wird und, dass das dritte Identifizierungsmittel in Reaktion auf den identifizierten TEID-C Wert, der gleich Null ist, betrieben wird.

13. Lastausgleichssystem nach Anspruch 11 oder 11, **dadurch gekennzeichnet, dass** das Lastausgleichssystem weiter umfasst:
ein drittes Weiterleitungsmittel (FWD3) zum Weiterleiten einer GTP-C-Nachricht mit einem identifizierten Nachrichtentypwert, der nicht gleich "Erzeuge Paketdatenprotokoll-Kontext" ist, an einen CPU-Knoten, durch Verwenden eines vorgegebenen Pfad- und Fehlermanagementverfahrens.

14. Lastausgleichssystem nach einem der Anspruch 11, 12 oder 13, **dadurch gekennzeichnet, dass** das Lastausgleichssystem weiter umfasst:
ein viertes Identifizierungsmittel (ID4) zum Identifizieren eines Ziel-IP-Adresswertes einer empfangenen IP-Nachricht und Bestimmen aus dem identifizierten Ziel-IP-Adresswert, ob die IP-Nachricht zu einem Steuerebene-Verkehr oder Benutzerebene-Verkehr gehört.

15. Lastausgleichsmittel nach Anspruch 14, **dadurch gekennzeichnet, dass** das Lastausgleichsmittel weiter umfasst:
ein fünftes Identifizierungsmittel (ID5) zum Identifizieren eines Protokollwertes einer IP-Nachricht, die zum dem Steuerebene-Verkehr gehört, und Bestimmen aus dem identifizierten Protokollwert, ob die IP-Nachricht eine Benutzerdatagramm-Protokoll, UDP, -Nachricht oder eine Übertragungs-Steuerprotokoll, TCP, -Nachricht umfasst.

16. Lastausgleichssystem nach Anspruch 15, **dadurch gekennzeichnet, dass** das Lastausgleichssystem weiter umfasst:
ein sechstes Identifizierungsmittel (ID6) zum Identifizieren eines Ziel-Port-Nummernwerts einer IP-Nachricht, die eine TCP-Nachricht umfasst, und Weiterleiten der TCP-Nachricht an einen CPU-Knoten, basierend auf ihrem identifizierten Ziel-Port-Nummernwert.

17. Lastausgleichssystem nach Anspruch 15, **dadurch gekennzeichnet, dass** das Lastausgleichssystem weiter umfasst:
ein siebtes Identifizierungsmittel (ID7) zum Identifizieren eines Ziel-Port-Nummernwerts einer IP-Nachricht, die eine UDP-Nachricht umfasst, und Bestimmen aus dem identifizierten Ziel-Port-Nummernwert, ob die UDP-Nachricht weiter eine GTP-C-Nachricht umfasst, eine Allgemeine-Paket-Funkdienst-Tunnelprotokoll-Strich, GTP-C', -Nachricht, eine Dynamische-Host-Einrichtungs-Protokoll, DHCP, -Nachricht oder eine entfernte Authentifizierungs-Einwahl-Benutzerdienst, RADIUS, -Nachricht.

18. Lastausgleichssystem nach Anspruch 17, **dadurch gekennzeichnet, dass** das Lastausgleichssystem weiter umfasst:
ein achtes Identifizierungsmittel (ID8) zum Weiterleiten einer GTP-C'-Nachricht, einer DHCP-Nachricht oder einer RADIUS-Nachricht an einen CPU-Knoten, basierend auf ihrem identifizierten Ziel-Port-Nummernwert.

19. Lastausgleichssystem nach einem der Ansprüche 11 bis 18, **dadurch gekennzeichnet, dass** das Lastausgleichssystem in einem Gateway-Allgemeiner-Paketfunkdienst-Unterstützungsknoten-Element (GGSN) eines GPRS-Kommunikationsnetzwerk angeordnet ist.

## Revendications

1. Procédé d'équilibrage des charges pour trafic de plan de contrôle d'un élément de réseau (GGSN) comprenant de multiples noeuds d'unité centrale de traitement, CPU, (CPU₁, CPU₂, ..., CPU_{N}) attribués à une adresse externe commune de Protocole Internet, IP, dans un réseau de télécommunication validé de transmission de données par paquets, le procédé comprenant les étapes consistant à :
recevoir des messages IP adressés à l'élément de réseau, et
identifier des messages IP reçus comprenant des messages de plan de contrôle - protocole de tunnel, GTP-C, de service général de radiocommunication par paquets, GPRS,
**caractérisé en ce que** le procédé comprend en outre les étapes consistant à :
identifier une valeur d'identificateur de point final de tunnel pour plan de contrôle, TEID-C, d'un message GTP-C,
en fonction de la valeur TEID-C identifiée du message GTP-C, soit retransmettre ledit message GTP-C à un noeud de CPU sur la base de la valeur TEID-C identifiée dudit message GTP-C, soit identifier une valeur de type de message dudit message GTP-C, et
retransmettre un message GTP-C avec une valeur de type de message identifiée égale à « Créer Contexte de Protocole de Données par Paquets » à un noeud de CPU en utilisant une procédure d'équilibrage des charges prédéterminée.

2. Procédé selon la revendication 1, **caractérisé en ce que** ladite retransmission dudit message GTP-C à un noeud de CPU sur la base de la valeur TEID-C identifiée dudit message GTP-C est effectuée si la valeur TEID-C identifiée n'est pas égale à zéro et ladite identification de la valeur de type de message du message GTP-C est effectuée si la valeur TEID-C identifiée est égale à zéro.

3. Procédé selon la revendication 1 ou 2, **caractérisé en ce que** le procédé comprend en outre l'étape consistant à :
retransmettre un message GTP-C avec une valeur de type de message identifiée non égale à « Créer Contexte de Protocole de Données par Paquets » à un noeud de CPU en utilisant une procédure de gestion d'erreurs et de parcours prédéterminée.

4. Procédé selon la revendication 1, 2 ou 3, **caractérisé en ce que** l'étape d'identification de messages IP reçus comprenant des messages GTP-C comprend en outre les étapes consistant à :
identifier une valeur d'adresse IP de destination d'un message IP reçu, et
déterminer à partir de la valeur d'adresse IP de destination identifiée si le message IP appartient au trafic de plan de contrôle ou au trafic de plan utilisateur.

5. Procédé selon la revendication 4, **caractérisé en ce que** le procédé comprend en outre les étapes consistant à :
identifier une valeur de protocole d'un message IP appartenant au trafic de plan de contrôle, et
déterminer d'après la valeur de protocole identifiée si le message IP comprend un message de protocole de datagramme utilisateur, UDP, ou un message de protocole de contrôle de transmission, TCP.

6. Procédé selon la revendication 5, **caractérisé en ce que** le procédé comprend en outre les étapes consistant à :
identifier une valeur de numéro de port de destination d'un message IP comprenant un message TCP, et
retransmettre le message TCP à un noeud de CPU sur la base de la valeur de numéro de port de destination identifiée.

7. Procédé selon la revendication 5, **caractérisé en ce que** le procédé comprend en outre les étapes consistant à :
identifier une valeur de numéro de port de destination d'un message IP comprenant un message UDP, et
déterminer à partir de la valeur de numéro de port de destination identifiée si le message UDP comprend en outre un message GTP-C, un message prime de protocole de tunnel de service général de radiocommunication par paquets, GTP-C', un message de protocole de configuration hôte dynamique, DHCP, ou un message de service utilisateur d'appel entrant d'authentification à distance, RADIUS.

8. Procédé selon la revendication 7, **caractérisé en ce que** le procédé comprend en outre l'étape consistant à :
retransmettre un message GTP-C', un message DHCP ou un message RADIUS à un noeud CPU sur la base de sa valeur de numéro de port de destination identifiée.

9. Procédé selon la revendication 1, 2, 3, 4, 5, 6, 7 ou 8, **caractérisé en ce que** le réseau de télécommunication validé de transmission de données par paquets réseau de télécommunication validé GPRS.

10. Procédé selon la revendication 9, **caractérisé en ce que** l'élément de réseau est un élément de noeud de support de service général de radiocommunication par paquets, GGSN.

11. Système d'équilibrage des charges pour trafic de plan de contrôle d'un élément de réseau (GGSN) comprenant de multiples noeuds d'unité centrale de traitement, CPU, (CPU₁, CPU₂, ..., CPU_{N}) attribués à une adresse externe commune de Protocole Internet, IP, dans un réseau de télécommunication validé de transmission de données par paquets, le système d'équilibrage des charges comprenant :
des premiers moyens d'identification (ID1) pour identifier des messages IP reçus adressés à l'élément de réseau, comprenant des messages de plan de contrôle - protocole de tunnel, GTP-C, de service général de radiocommunication par paquets, GPRS,
**caractérisé en ce que** le système d'équilibrage des charges comprend en outre :
des deuxièmes moyens d'identification (ID2) pour identifier une valeur d'identificateur de point final de tunnel pour plan de contrôle, TEID-C, d'un message GTP-C,
des premiers moyens de retransmission (FWD1) pour retransmettre un message GTP-C à un noeud de CPU sur la base de la valeur TEID-C identifiée dudit message GTP-C,
des troisièmes moyens d'identification (ID3) pour identifier une valeur de type de message d'un message GTP-C, et
des deuxièmes moyens de retransmission (FWD2) pour retransmettre un message GTP-C avec une valeur de type de message identifiée égale à « Créer Contexte de Protocole de Données par Paquets » à un noeud de CPU en utilisant une procédure d'équilibrage des charges prédéterminée.

12. Système d'équilibrage des charges selon la revendication 11, **caractérisé en ce que** lesdits premiers moyens de retransmission fonctionnent en réponse à la valeur TEID-C identifiée n'étant pas égale à zéro et lesdits troisièmes moyens d'identification fonctionnent en réponse à la valeur TEID-C identifiée étant égale à zéro.

13. Système d'équilibrage des charges selon la revendication 11 ou 12, **caractérisé en ce que** le système d'équilibrage des charges comprend en outre :
des troisièmes moyens de retransmission (FWD3) pour retransmettre un message GTP-C avec une valeur de type de message identifiée non égale à « Créer Contexte de Protocole de Données par Paquets » à un noeud de CPU en utilisant une procédure de gestion d'erreurs et de parcours prédéterminée.

14. Système d'équilibrage des charges selon la revendication 11, 12 ou 13, **caractérisé en ce que** le système d'équilibrage des charges comprend en outre :
des quatrièmes moyens d'identification (ID4) pour identifier une valeur d'adresse IP de destination d'un message IP reçu et déterminer à partir de la valeur d'adresse IP de destination identifiée si le message IP appartient au trafic de plan de contrôle ou au trafic de plan utilisateur.

15. Système d'équilibrage des charges selon la revendication 14, **caractérisé en ce que** le système d'équilibrage des charges comprend en outre :
des cinquièmes moyens d'identification (ID5) pour identifier une valeur de protocole d'un message IP appartenant au trafic de plan de contrôle, et déterminer d'après la valeur de protocole identifiée si le message IP comprend un message de protocole de datagramme utilisateur, UDP, ou un message de protocole de contrôle de transmission, TCP.

16. Système d'équilibrage des charges selon la revendication 15, **caractérisé en ce que** le système d'équilibrage des charges comprend en outre :
des sixièmes moyens d'identification (ID6) pour identifier une valeur de numéro de port de destination d'un message IP comprenant un message TCP et retransmettre le message TCP à un noeud de CPU sur la base de la valeur de numéro de port de destination identifiée.

17. Système d'équilibrage des charges selon la revendication 15, **caractérisé en ce que** le système d'équilibrage des charges comprend en outre :
des septièmes moyens d'identification (ID7) pour identifier une valeur de numéro de port de destination d'un message IP comprenant un message UDP et déterminer à partir de la valeur de numéro de port de destination identifiée si le message UDP comprend en outre un message GTP-C, un message prime de protocole de tunnel de service général de radiocommunication par paquets, GTP-C', un message de protocole de configuration hôte dynamique, DHCP, ou un message de service utilisateur d'appel entrant d'authentification à distance, RADIUS.

18. Système d'équilibrage des charges selon la revendication 17, **caractérisé en ce que** le système d'équilibrage des charges comprend en outre :
des huitièmes moyens d'identification (ID8) pour retransmettre un message GTP-C', un message DHCP ou un message RADIUS à un noeud CPU sur la base de sa valeur de numéro de port de destination identifiée.

19. Système d'équilibrage des charges selon les revendications 11 à 18, **caractérisé en ce que** le système d'équilibrage des charges est agencé dans un élément de noeud de support de service général de radiocommunication par paquets, GGSN, d'un réseau de télécommunication validé GPRS.
